# EUROPEAN PATENT APPLICATION

(11) **EP 4 614 077 A1**
(43) Date of publication of application: **10.09.2025**
(21) Application number: 24191369.8
(22) Date of filing: 29.07.2024
(51) Int. Cl.: F24D 19/00, F24H 1/20, F24H 9/45, C23F 13/02, C23F 13/06, C23F 13/18, F24H 9/13, F16L 25/02

(54) **ELECTRIC WATER HEATER WITH ANTI-ELECTROCHEMICAL CORROSION FUNCTION**

(30) Priority: 05.03.2024 CN 202410256725
(71) Applicant: Wuhan Haier Water Heater Co., Ltd., Wuhan Hubei 430056 (CN); Qingdao Economic and Technological Development Zone Haier Water Heater Co., Ltd., Qingdao, Shangdong 266000 (CN); Haier Smart Home Co., Ltd., Qingdao, Shandong 266101 (CN)
(72) Inventor: DU, Tianhai, Hubei 430056 (CN); SHI, Hao, Hubei 430056 (CN); CAI, Xiangzhou, Hubei 430056 (CN); ZHAO, Xiaoyong, Hubei 430056 (CN); YU, Shuisheng, Hubei 430056 (CN); ZHENG, Tao, Hubei 430056 (CN)
(74) Representative: Høiberg P/S

(57) **Abstract**

The present invention discloses an electric water heater with anti-electrochemical corrosion function, which includes: an outer casing (100), wherein the an outer casing (100) is provided with an inlet pipe (210) and an outlet pipe (220), an control board (123) is arranged in the outer casing (100); an inner tank (200), wherein the an inner tank (200) is respectively connected with the inlet pipe (210) and the outlet pipe (220); an electric heating element (300), where the electric heating element (300) is arranged in the inner tank (200; the inlet pipe (210) and the outlet pipe (220) are equipped with anti-electrochemical corrosion pipe assemblies, the anti-electrochemical corrosion pipe assembly includes an inner tube body (211), an insulating fixing member (212), and an outer connecting tube body (213), an communicating hole (2121) is provided on the insulating fixing member (212), the inner tube body (211) is connected to the outer connecting tube body (213) through the insulating fixing member (212), the inner tube body (211) is in communication with the outer connecting tube body (213) through the communicating hole (2121), and the inner tube body (211) and the outer connecting tube body (213) are insulated from each other; the insulating fixing member (212) is arranged on the inner tank (200), the inner tube body (211) is located in the inner tank (200), and the outer connecting tube body (213) is located outside the inner tank (200). This achieves the integration of water pipes with anti-electrochemical corrosion in the electric water heater, to improve the reliability of the electric water heater and prolong its service life.

## Description

### Technical Field

The invention pertains to the field of household appliance technology, particularly involving an electric water heater with an anti-electrochemical corrosion function.

### Background Technology

At present, water heaters have become a staple appliance in our everyday lives. When it comes to electric water heaters, they can be divided into two categories based on their heating capabilities: storage and instantaneous. The storage electric water heater, which comes with a built-in water tank, offers the benefits of a substantial water supply and consistent temperature. Consequently, this type of water heater has gained considerable favor among homeowners.

Traditional electric water heaters are typically composed of a casing, an inner tank, an electric heating tube, and a magnesium rod. The inner tank features an inlet pipe and an outlet pipe, while the electric heating tube and magnesium rod are situated inside the inner tank, which is housed within the casing. During operation, water is introduced into the inner tank, and the electric heating tube is activated to heat the water to the desired temperature. When hot water is required, cold water is injected into the inner tank via the inlet pipe, forcing the hot water to exit through the outlet pipe.

However, traditional inlet and outlet pipes, with one end exposed outside and the other end inside the inner tank, are typically made of iron. In contrast, the external water pipes connecting to the home are usually copper, creating a potential difference between the two materials at the point of connection. This difference can lead to electrochemical corrosion over time, resulting in water leakage and reducing the reliability and lifespan of the electric water heater. Therefore, the present invention aims to tackle the technical challenge of enhancing the reliability and extending the service life of electric water heaters.

### Summary

The present invention provides an electric water heater with anti-electrochemical corrosion function, which integrates water pipes with anti-electrochemical corrosion, to improve the reliability of the electric water heater and prolong its service life.

One aspect of the present invention provides an electric water heater with anti-electrochemical corrosion function. It comprises:
an outer casing, wherein the outer casing is provided with an inlet pipe and an outlet pipe, and an control board is arranged in the outer casing;
an inner tank, wherein the inner tank is respectively connected with the inlet pipe and the outlet pipe; and
an electric heating element, wherein the electric heating element is arranged in the inner tank;
wherein the inlet pipe and the outlet pipe are equipped with anti-electrochemical corrosion pipe assemblies, the anti-electrochemical corrosion pipe assembly includes an inner tube body, an insulating fixing member, and an outer connecting tube body, an communicating hole is provided on the insulating fixing member, the inner tube body is connected to the outer connecting tube body through the insulating fixing member, the inner tube body is in communication with the outer connecting tube body through the communicating hole, and the inner tube body and the outer connecting tube body are insulated from each other; the insulating fixing member is arranged on the inner tank, the inner tube body is located in the inner tank, and the outer connecting tube body is located outside the inner tank and is configured to be made of the same metal material as external water pipe.

By using water inlet and outlet pipes with an anti-electrochemical corrosion function, the anti-electrochemical corrosion pipe assembly is fixed and connected through an insulating fixing member. This separates and fixes the inner tube body and the outer connecting tube body. During assembly, the pipe assembly is fixed and installed on the inner tank through the insulating fixing member, with the inner tube body located inside the inner tank and the outer connecting tube body located outside the inner tank. The inner tube body and the outer connecting tube body are insulated from each other through the insulating fixing member, preventing electrochemical corrosion of the inner tube body inside the inner tank. Furthermore, the outer connecting tube body can be made of the same metal material as the water pipes in the user's home, avoiding the occurrence of electrochemical corrosion caused by direct contact between different metals after being connected with the water pipes in the user's home. This improves the reliability and prolongs the service life of the electric water heater.

Moreover, since the inner tube body and the outer connecting tube body are directly fixed and connected through the insulating fixing member and fixed on the inner tank, the pipe assembly has good anti-leakage performance at the factory stage. This avoids the occurrence of leakage in the anti-electrochemical corrosion pipe assembly itself during installation and connection of water pipes in the user's home. This reduces the workload of installation workers and reduces the occurrence of installation leakage and other problems.

### Detailed Description of the Drawings:

To more clearly illustrate the technical solutions of the embodiments of the present invention or the existing technology, a brief introduction to the accompanying drawings required for the description of the embodiments or the existing technology will be provided below. It is apparent that the following descriptions of the accompanying drawings are some embodiments of the present invention. For those skilled in the art, other drawings can be obtained based on these drawings without engaging in creative labor.
Fig.1 is a schematic structural diagram of one embodiment of the electric water heater of the present invention;
Fig.2 is a schematic structural diagram of another embodiment of the electric water heater of the present invention;
Fig.3 is a cross-sectional view of the electric water heater in Fig.2;
Fig.4 is a schematic structural diagram of the anti-corrosion component in Fig.2;
Fig.5 is a cross-sectional view of one embodiment of the anti-corrosion component in Fig.4;
Fig.6 is a partial enlarged schematic diagram of the N region in Fig.5;
Fig.7 is a partial structural schematic diagram of the electric water heater in Fig.1;
Fig.8 is an assembly diagram of the end cover and the control board in Fig.7;
Fig.9 is a partial enlarged schematic diagram of the B region in Fig.8;
Fig.10 is a schematic structural diagram of the end cover in Fig.8;
Fig.11 is a partial enlarged schematic diagram of the C region in Fig.10;
Fig.12 is a schematic structural diagram of the fixing installation component in Fig.8;
Fig.13 is an exploded view of the electric water heater in Fig.1 (part two);
Fig.14 is a partial enlarged schematic diagram of the M region in Fig.13;
Fig.15 is an exploded view of the casing component in Fig.13;
Fig.16 is a cross-sectional view of another embodiment of the anti-corrosion component in Fig.4;
Fig.17 is a cross-sectional view of another embodiment of the anti-corrosion component in Fig.4;
Fig.18 is a cross-sectional view of the inlet pipe in Fig.2;
Fig.19 is a schematic structural diagram of another embodiment of the electric water heater of the present invention;
Fig.20 is a schematic structural diagram of one embodiment of the filter in Fig.19;
Fig.21 is a schematic structural diagram of another embodiment of the filter in Fig.19;
Fig.22 is a schematic structural diagram of another embodiment of the filter in Fig.21;
Fig.23 is a cross-sectional view along the A-A direction in Fig.22;
Fig.24 is an exploded view of the filter in Fig.21;
Fig.25 is a schematic structural diagram of the cleaning component in Fig.24;
Fig.26 is a schematic structural diagram of one embodiment of the water distributor in Fig.24;
Fig.27 is a schematic structural diagram of another embodiment of the water distributor in Fig.24.

### Detailed Description of the Invention

To clarify the objectives, technical solutions, and advantages of embodiments of the present invention, a detailed description of the technical solutions in these embodiments will be provided, referencing the accompanying drawings. It should be noted that the described embodiments represent only a portion, not the entirety, of the embodiments of the present invention. Furthermore, any other embodiments derived by those skilled in the art, without engaging in creative labor, also fall within the protective scope of the present invention.

An electric water heater is a device that heats water using electricity as its primary energy source. When powered, it generates high temperatures that directly heat the water stored within, thereby providing hot water.

An electric water heater typically comprises components such as a water tank, electric heating element, and a control board. The water tank forms a water storage cavity serving as a reservoir for storing the water that needs to be heated, while the electric heating element are positioned inside the reservoir. The control board is used to regulate the activation and deactivation of the electric heating element, ensuring that the water in the water tank is heated to the desired temperature.

The water tank of an electric water heater typically consists of an outer casing and an inner tank, with an insulation layer formed between the outer casing and the inner tank. The outer casing is usually made of plastic, allowing for a range of visually appealing designs, while the inner tank can be made of either metal or plastic, depending on the requirements.

Common insulation materials used of the insulation layer between the outer casing and the inner tank include stone wool, sponge, foam plastic, and polyurethane foam. In the prior art, the insulation layer is typically formed by foaming to achieve good insulation effects.

In the case of inner tanks with a metal tank body, the inner surface is susceptible to corrosion due to water quality. To address this issue, a magnesium rod is installed inside the water tank and inserted into the water storage cavity.

Magnesium is the metal with the lowest electrochemical potential and is physiologically non-toxic, making it an ideal material for creating magnesium rods to safeguard the inner tank. The size of the magnesium rod plays a crucial role in determining the duration and effectiveness of inner tank protection, and essentially, the larger the magnesium rod, the better the protection, and the longer the protection time.

Furthermore, the water tank is equipped with an inlet pipe and an outlet pipe. The inlet pipe is used to deliver cold water to the water storage cavity within the water tank, while the outlet pipe is used to discharge the hot water from the water storage cavity.

Regarding the electric heating element, various electric heating methods such as electric heating wires, magnetic energy, or silicon tube heating can be utilized to heat the water stored in the water storage cavity.

The control board serves the purpose of receiving detection signals from relevant sensors, such as water temperature sensors and flow sensors, and controlling the connection and disconnection of the electric heating element.

During the electric water heater's operation, the control board regulates the electric heating element to heat up when powered. Once the water temperature in the water tank reaches the preset value, the control board disconnects the electric heating element from the power supply.

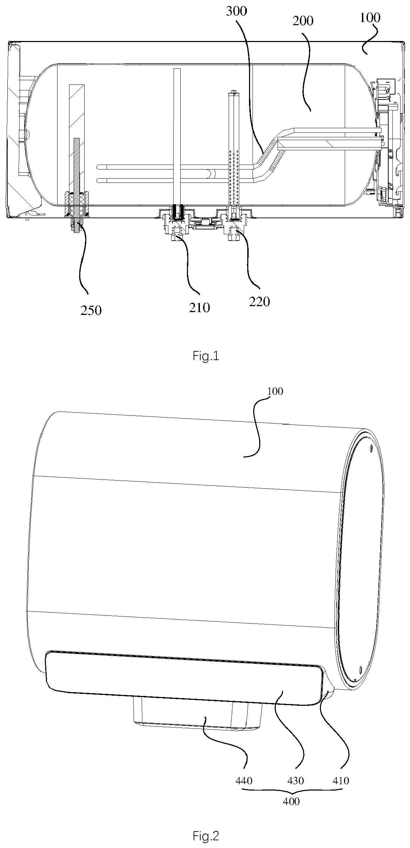

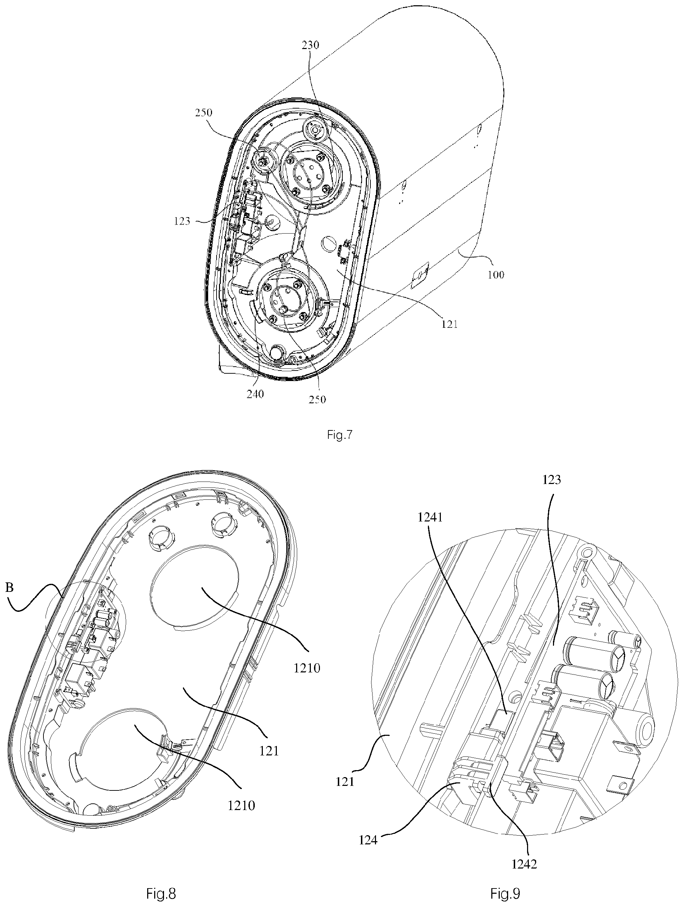

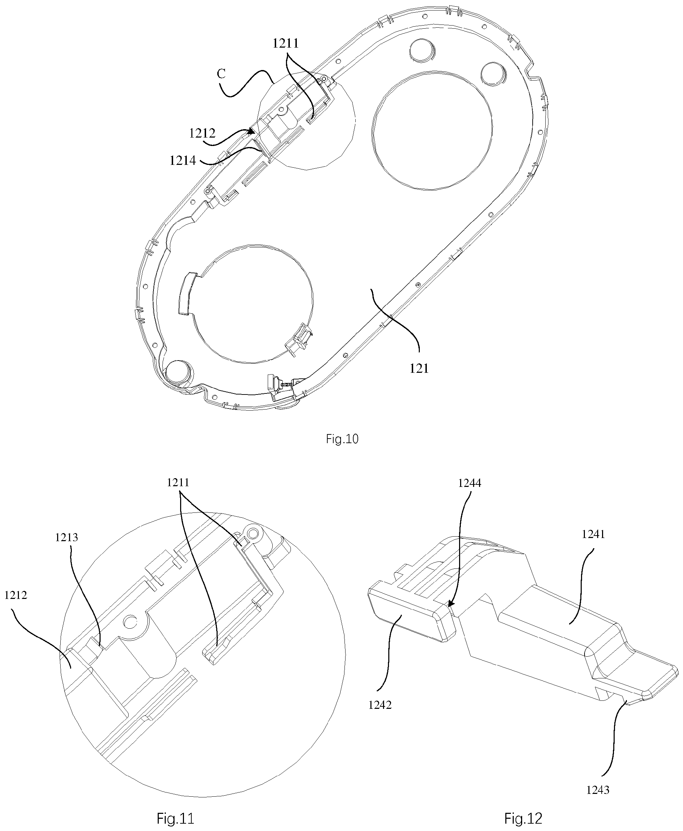

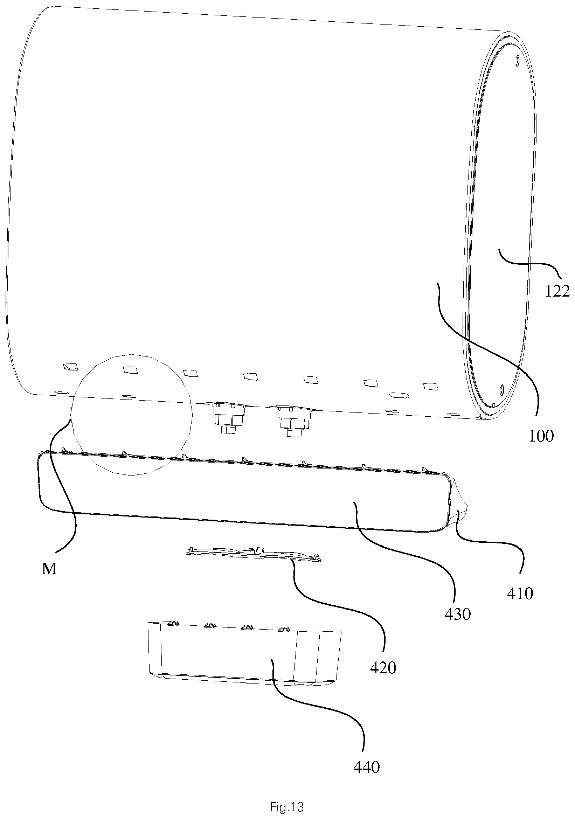

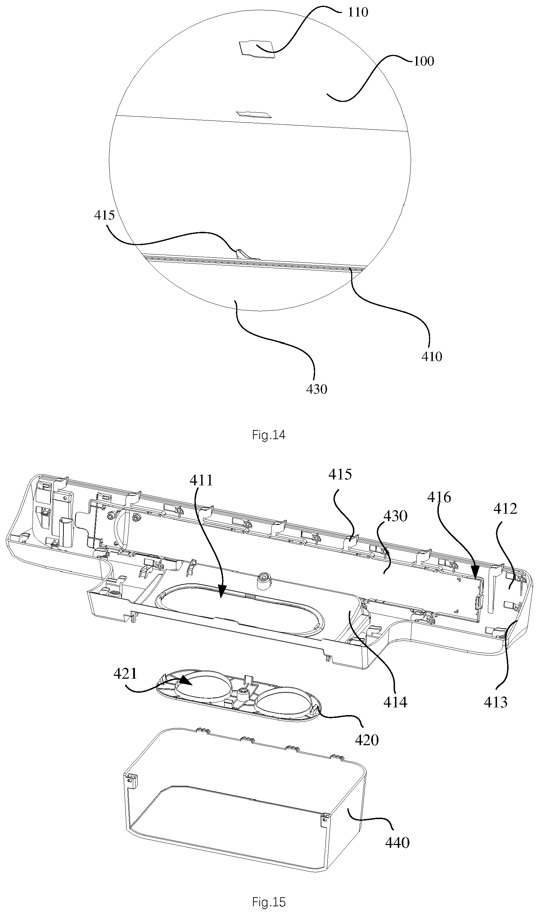

Embodiment 1, as shown in Fig.1 to Fig.16, the present invention provides an electric water heater, including: an outer casing 100, an inner tank 200, and electric heating element 300.

The outer casing 100 includes a control board 123, and the inner tank 200 is provided inside the outer casing 100, with the electric heating element 300 disposed inside the inner tank 200. The inner tank 200 has an inlet pipe 210 and an outlet pipe 220.

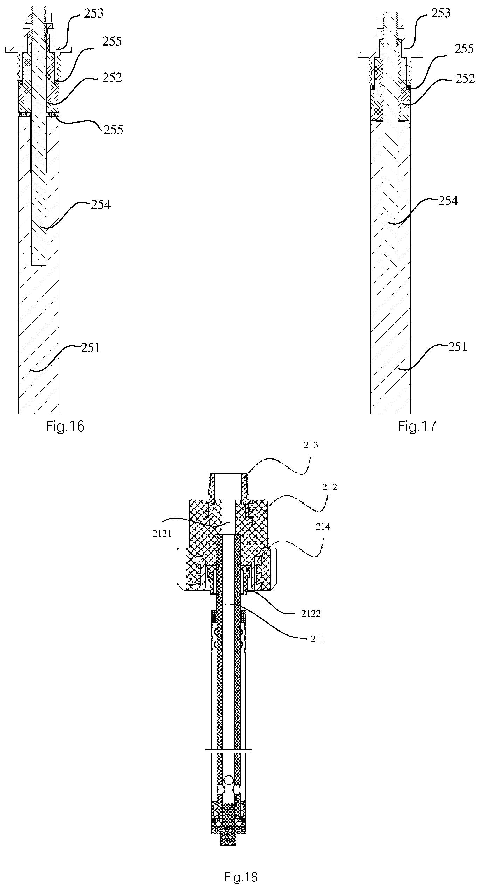

To prevent electrochemical corrosion caused by direct contact of dissimilar metals, both the inlet and outlet pipes are equipped with anti-electrochemical corrosion pipe assemblies. Taking the inlet pipe 210 as an example, as shown in Fig.18, the inlet pipe 210 includes an inner tube body 211, an insulating fixing member 212, and an outer connecting tube body 213. The insulating fixing member 212 has a communicating hole 2121. The inner tube body 211 is connected to the outer connecting tube body 213 through the insulating fixing member 212, and the inner tube body 211 is in communication with the outer connecting tube body 213 through the communicating hole 2121, with the inner tube body 211 and the outer connecting tube body 213 being electrically insulated. The insulating fixing member 212 is disposed on the inner tank 200, the inner tube body 211 is located inside the inner tank 200, and the outer connecting tube body 213 is located outside the inner tank 200 and is configured to be made of the same metal material as the external water pipe connected to it.

Specifically, the inlet pipe 210 is equipped with the anti-electrochemical corrosion pipe assembly, with the part located inside the inner tank 200 being the inner tube body 211 and the part located outside the inner tank 200 for connection to the user's home water pipe being the outer connecting tube body 213. The inlet pipe 210 is fixed and installed on the inner tank 200 through the insulating fixing member 212.

During practical application, following the installation of the electric water heater in the user's home, it is essential to connect the user's home water supply pipe to the inlet pipe 210. In this process, the outer connecting tube body 213 of the inlet pipe 210 is used to establish the connection with the user's home water supply pipe. Typically, the outer connecting tube body 213 is made from the same metal material as the user's home water supply pipe. By ensuring that the water supply pipe and the outer connecting tube body 213 share the same metal material, the issue of electrochemical corrosion resulting from the direct contact of dissimilar metals can be effectively prevented.

In one embodiment of the present invention, an auxiliary connecting member 214 is also provided on the insulating fixing member 212, and the auxiliary connecting member 214 is a sleeve structure that is fitted on the outer surface of the inner tube body 211. The inner wall of the auxiliary connecting member 214 is provided with internal threads, and the auxiliary connecting member 214 is electrically insulated from the inner tube body 211.

To assist the operator in fixing and connecting the insulating fixing member 212 to the inner tank 200 during assembly, an auxiliary connecting member 214 is included on the insulating fixing member 212. The auxiliary connecting member 214 is generally made of metal material to ensure a secure attachment to the inner tank 200. Additionally, to prevent electrochemical corrosion resulting from dissimilar metal contact, the auxiliary connecting member 214 and the inner tube body 211 are electrically insulated from each other by the insulating fixing member 212. Furthermore, the insulating fixing member 212 is also provided with an insulating sleeve structure 2122, which is located between the inner tube body 211 and the auxiliary connecting member 214.

In one embodiment of the present invention, aimed at enhancing the sealing performance of the anti-electrochemical corrosion pipe assembly itself, the outer connecting tube body 213 and the auxiliary connecting member 214 are enclosed within the insulating fixing member 212.

The insulating fixing member 212 is typically made of plastic material. In the injection molding process of the insulating fixing member 212, the outer connecting tube body 213 and the auxiliary connecting member 214 are placed in the mold for producing the insulating fixing member 212. Subsequently, as the insulating fixing piece 212 undergoes the injection molding process, the outer connecting tube body 213 and the auxiliary connecting member 214 become embedded within the insulating fixing piece 212.

In one embodiment of the present invention, the inner tube body 211 is designed for easy sealing by forming a stepped hole structure in the communication hole 2121. This results in a stepped surface being formed within the communication hole 2121, allowing the inner tube body 211 to be inserted and seated against the step surface.

During the assembly process of the inner tube body 211, it is sealed and inserted into the communication hole 2121, with the end of the inner tube body 211 abutting against the step surface for positioning.

To mitigate electrochemical corrosion, both the inlet and outlet pipes are fitted with the anti-electrochemical corrosion pipe assemblies. Each assembly features the insulating fixing member 212 that separates the inner tube body 211 from the outer connecting tube body 213, while simultaneously securing and joining them. During assembly, the pipe assembly is secured to the inner tank 200. The inner tube body 211 is positioned inside the inner tank 200, while the outer connecting tube body 213 is located outside the inner tank 200. The insulating fixing member 212 serves as a barrier between the inner tube body 211 and the outer connecting tube body 213, effectively preventing electrochemical corrosion of the inner tube body 211. Furthermore, the outer connecting tube body 213 can be made of the same metal as the user's home piping. After the outer connecting tube body 213 is connected with the user's home water pipe, this compatibility eliminates the risk of electrochemical corrosion that can occur due to direct contact between dissimilar metals, enhancing the reliability and extending the lifespan of the electric water heater.

Furthermore, the inner tube body 211 and the outer connecting tube body 213 are directly fixed and connected together through the insulating fixing member 212, which is then secured to the inner tank 200. This integrated design ensures a leak-proof seal from the factory stage onwards, preventing leaks during installation at the user's home. It also simplifies on-site installation, reducing the workload for workers and minimizing the risk of installation-related leaks or problems.

In another embodiment, to further reduce corrosion in electric water heaters caused by the direct contact of dissimilar metals, an improved design can be implemented.

Specifically, to minimize corrosion inside the inner tank 200, the electric water heater includes an anti-corrosion component 250, which features a magnesium rod 251. The anti-corrosion component 250 has been structurally redesigned to reduce electrochemical corrosion of the magnesium rod 251 due to direct contact with dissimilar metals.

One end of the magnesium rod 251 has an insertion hole 257. The anti-corrosion component 250 further comprises an insulating part 252, a fixing installation part 253, and a conductive rod 254.

The insulating part 252 has a first through hole 258, while the fixing installation part 253 has a second through hole 259 and is constructed to be securely installed on the inner tank 200. The conductive rod 254 passes through the second through hole 259 and the first through hole 258 in sequence and is inserted into the insertion hole 257, ensuring an electrical connection with the magnesium rod 251. The insulating part 252 is positioned between the magnesium rod 251 and the fixing installation part 253.

During installation of the anti-corrosion component 250, the magnesium rod 251 is placed into the inner tank 200, and the fixing installation part 253 is securely connected to the inner tank 200 to support the magnesium rod 251 inside the inner tank 200. The control board 123 is electrically connected to both the electric heating element 300 and the conductive rod 254 of the anti-corrosion component 250.

In use, the inner tank 200 is filled with water, submerging the magnesium rod 251. Since the magnesium rod 251 and the fixing installation part 253 are separated by the insulating part 252, the part of the magnesium rod 251 in contact with water does not directly contact the fixing installation part 253, but is separated by the insulating part 252. This separation prevents electrochemical corrosion caused by the direct contact of dissimilar metals, such as magnesium and the iron-made fixing installation part 253, in the water in use.

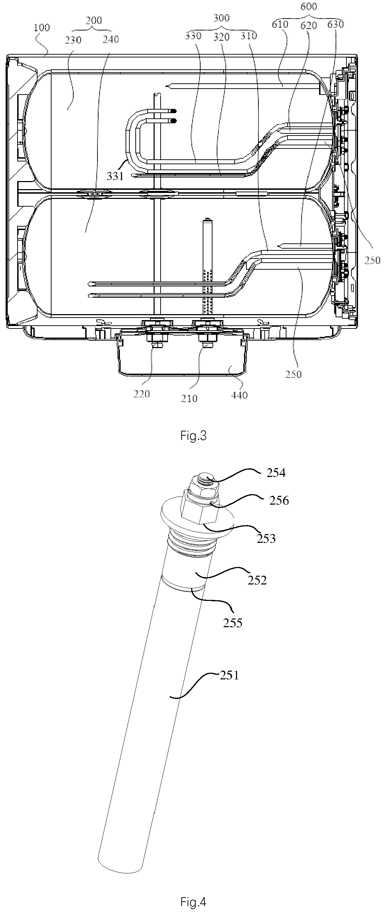

As shown in Fig.1, the electric water heater can be equipped with a single inner tank 200, or as shown in Fig.3, it can be equipped with multiple inner tanks 200.

In one embodiment, the insulating part 252 can be an independent component or directly injection molded onto the magnesium rod 251 or the fixing installation part 253.

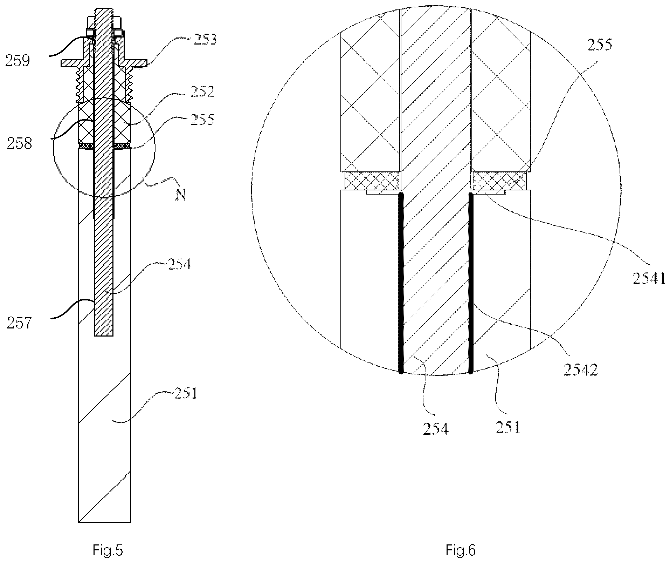

As shown in Fig.5, the insulating part 252 is injection molded onto the fixing installation part 253.

The conductive rod 254 needs to be inserted into the insertion hole 257 one the magnesium rod 251.To prevent water ingress at the connection interface between the conductive rod 254 and the magnesium rod 251, which could lead to electrochemical rod 251, a sealing ring 255 is inserted between the insulating part 252 and the magnesium rod 251.

Specifically, the sealing ring 255 between the insulating part 252 and the magnesium rod 251 ensures the integrity of the seal, especially during extended use, thereby enhancing the overall reliability of the assembly.

In some embodiments of the present invention, a stop ring 2541 is installed on the conductive rod 254. The stop ring 2541 is in contact with the end of the magnesium rod 251 and is sandwiched between the sealing ring 255 and the magnesium rod 251.

Specifically, during the installation of the conductive rod 254, the stop ring 2541 is incorporated to ensure accurate assembly by the operator. The stop ring 2541 is used to restrict the assembly position of the conductive rod 254 relative to the magnesium rod 251, thereby facilitating a precise and repeatable assembly process.

Alternatively, as shown in Fig. 17, the insulating part 252 can be injection molded onto the magnesium rod 251. The sealing ring 255 is placed between the fixing installation part 253 and the insulating part 252.

Alternatively, as shown in Fig.16, the insulating part 252 can be an independent component. A sealing ring 255 is provided between the fixing installation part 253 and the insulating part 252, and another sealing ring is provided between the magnesium rod 251 and the insulating part 252.

In one embodiment of the present invention, the conductive rod 254 is equipped with an insulating coating 2542, which is located adjacent to the stop ring 2541. The portion of the conductive rod 254 that bears the insulating coating 2542 is inserted into the insertion hole 257.

The insertion hole 257, specifically tailored for the installation of the conductive rod 254, creates a relatively thin section around itself on the magnesium rod 251. As the magnesium rod 251 is consumed during operation, this thin section will gradually erode, potentially exposing the conductive rod 254. However, the insulting coating 2542 applied to the wall of the conductive rod 254 prevents direct contact with the magnesium rod 251, mitigating the risk of electrochemical corrosion.

To maintain electrical conductivity between the conductive rod 254 and the magnesium rod 251, the end face of the conductive rod 254 remains uncoated to make contact with the magnesium rod 251. Additionally, the surface of the stop ring 2541 that interfaces with the magnesium rod 251 is coated with the insulting coating.

In one embodiment of the present invention, the end of the conductive rod 254 that extends beyond the fixing installation part 253 is equipped with a terminal 256.

Specifically, in order to facilitate wiring between the conductive rod 254 and the control board 123, the terminal 256 can be provided on the conductive rod 254 allowing for convenient connection of wires to the control board 123.

In some embodiments of the present invention, to enhance ease of assembly, the outer circumference of the fixing installation part 253 is provided with external threads. The external threads enable the fixing installation part 253 to be securely connected to the inner tank 200. Additionally, the outer circumference of the end of conductive rod 254, where it extends beyond the fixing installation part 253, is equipped with external threads, allowing for easy attachment of the terminal to the end of the conductive rod 254 using a nut.

In one embodiment of the present invention, the consumption rate of the magnesium rod 251 can be determined during actual use as follows:

The method comprises:
Step 1: While the electric water heater is actively heating, measure the voltage signal between the inner tank 200 and the magnesium rod 251; and record the corresponding corrosion current and the corrosion current quantity for each specific time period.
Step 2: When the electric water heater is turned off, record the inlet water temperature. When the power is restored, record the inlet water temperature again. The time interval between power off and power on is T. Using the average inlet water temperature of the two measurements, retrieve the corrosion current corresponding to the current collection to determine the corrosion current quantity during the power-off period.
Step 3: Continuously sample data every Δt seconds for a duration of t1 seconds. This constitutes one collection cycle. Calculate the average current during the collection cycle. If the current value from n consecutive collection cycles is below 10, then it is determined that the magnesium rod 251 has failed and an alert is issued.

Specifically, the magnesium rod 251 and the inner tank 200 are immersed in the same solution, an anti-corrosion circuit is formed between the external and the inner tank 200 through the wire on the conductive rod 254, and a primary battery is formed due to the potential difference between the magnesium rod 251 and the inner tank 200. Within the anti-corrosion circuit, a corrosion current flows, which is monitored by a current detector on the control board 123 to assess the corrosion state of the inner tank 200. Furthermore, the inner tank 200 and the electric heating element 300 are connected via a resistor R. This configuration ensures that the magnesium rod 251 and the inner tank 200 are directly connected, while the magnesium rod 251 and the electric heating element 300, as well as the electric heating element 300 and the inner tank 200, are connected through a resistor R. The control board 123 continuously monitors the corrosion current between the magnesium rod 251 and the inner tank 200.

Step 1 specifically involves: while the electric water heater is actively heating, the control board 123 starts collecting data. The voltage signal between the inner tank 200 and the magnesium rod 251 is collected and the sampling resistor is automatically connected to convert the voltage signal into a current signal. The control board 123 samples the current signal and records the corresponding corrosion current and corrosion current quantity for each time period and transmits the data to the cloud for review and further research.

Step 2 specifically involves: the control board 123 records the inlet water temperature at the time of power failure when the electric water heater is powered off. Once power is restored, the inlet water temperature is recorded again. The power off and on interval time is T. Using the average inlet water temperature of the two measurements, retrieve the corrosion current corresponding to the current collection to determine the corrosion current quantity during the power-off period.

Step 3 specifically involves: the control board 123 collects data every Δt seconds for a duration of t1 seconds, . This constitutes one collection cycle. Calculate the average current during the collection cycle. If the current value from n consecutive collection cycles is below 11mA, it indicates that the magnesium rod 251 has failed and needs to be replaced as soon as possible. The control board 123 sends a signal to the display panel of the electric water heater to inform the user.

According to Faraday's law, the total amount of electricity that the magnesium rod 251 can provide can be calculated based on its current weight, which can then be used to indicate the remaining amount of magnesium rod 251 (as shown in formula one). When the control unit records the current mAh and compares it with the total amount, the consumption degree of the magnesium rod 251 can be obtained, and the user can view the remaining protection time in real-time. When the ratio of the current to the total amount is less than 5%, it indicates that the magnesium rod 251 is about to fail and needs to be replaced as soon as possible. The control unit sends a signal to the display panel to inform the user.

Formula one: n=KQ=Kit; wherein K is the proportionality constant, Q is the amount of electricity passing through the electrode, I is the current passing through the electrode, and t is the duration of the electrode reaction.

Embodiment 2: as shown in Fig.1 to Fig.16, in one embodiment of the present invention, the inner tank 200 includes an upper tank body 230 and a lower tank body 240, with the upper tank body 230 located above the lower tank body 240. The inlet pipe 210 extends into the lower tank body 240, and the outlet pipe 220 extends into the upper tank body 230.

The electric heating element 300 includes a first heating tube 330, a second heating tube 320, and a third heating tube 310. The first heating tube 330 and the second heating tube 320 are located in the upper tank body 230, with the first heating tube 330 extending to the inlet of the outlet pipe 220 and the second heating tube 320 extending at the bottom of the upper tank body 230. The third heating tube 310 is located in the lower tank body 240 and extends at the bottom of the lower tank body 240.

The temperature sensing module 600 includes a first temperature sensor 610, a second temperature sensor 620, and a third temperature sensor 630. The first temperature sensor 610 and the second temperature sensor 620 are located in the upper tank body 230, with the first temperature sensor 610 arranged above the second temperature sensor 620 and near the inlet of the outlet pipe 220. The third temperature sensor 630 is located in the lower tank body 240.

The control board 123 is configured to control the first heating tube 330 to be electrified and heated based on the water temperature detected by the first temperature sensor 610, control the second heating tube 320 to be electrified and heated based on the water temperature detected by the second temperature sensor 620, and control the third heating tube 310 to be electrified and heated based on the water temperature detected by the third temperature sensor 630.

In practice, users have the flexibility to select different heating methods when operating the electric water heater to ensure a hot water supply that meets their specific needs. This adaptability enables the electric water heater to accommodate a range of hot water usage demands.

The upper tank body 230 is equipped with two heating tubes. The first heating tube 330 is located close to the outlet of the outlet pipe 220, while the second heating tube 320 is provided at the bottom of the upper tank body 230.

Under normal circumstances, the electric water heater conserves energy by activating only the second heating tube 320, which heats the water in the upper tank body 230.

If immediate access to hot water is required upon turning on the electric water heater, the first heating tube 330 near the outlet pipe 220 is activated. This enables the rapid heating of the water at the inlet of the water outlet pipe 230 and the water flowing through it, thus fulfilling the demand for instant hot water.

When users need a larger volume of hot water, the second heating tube 320 at the bottom of the upper tank body 230 and the third heating tube 310 in the lower tank body 240 are activated together. This increases the hot water capacity of the electric water heater.

Each heating tube, namely the first heating tube 330 and the second heating tube 320 in the upper tank body 230, and the third heating tube 310 in the lower tank body 240, is fitted with a corresponding temperature sensor to monitor the water temperature. Based on the temperature readings from different temperature sensors, the control board 123 can regulate the corresponding heating tubes. This feature enables users to choose from various hot water supply modes tailored to their needs during actual application, thereby enhancing the water heater's hot water supply options and improving user experience.

In one embodiment of the present invention, the first heating tube 330 is positioned with its middle section at the bottom of the upper tank body 230 and its free end extends upward along the outlet pipe 220.

To maximize the heat generated by the first heating tube 330 for an immediate hot water supply, its fixed end is secured to the flange of the upper tank body 230. From there, the first heating tube 330 extends and spreads out within the upper tank body 230, with its middle section curving downward to the bottom of the upper tank body 230. Finally, its free end ascends along the outlet pipe 220, enabling rapid and efficient heating of the water flowing through the outlet pipe 220 and boosting the output of instant hot water.

In one embodiment of the present invention, the free end of the first heating tube 330 is provided with a bent section 331, which is disposed near the water inlet of the outlet pipe 220 and beneath the first temperature sensor 610.

The bent section 331 has an increased heating area, which facilitates the heating of the water around the water inlet of the outlet pipe 220 from below, enhancing the heating efficiency at the inlet and improving the supply of instant hot water.

In one embodiment of the present invention, the first temperature sensor 610 comprises: a normal temperature sensor (not shown in the figures) and an over-temperature sensor (not shown in the figures).

The control board 123 is configured to regulate the heating power of the first heating tube 330 in response to the water temperature received from the normal temperature sensor.

The control board 123 is configured to control the on/off state of the first heating tube 330 in response to the water temperature received from the over-temperature sensor.

During typical operation, when the user demands instant hot water, the control board 123 modulates the heating power of the first heating tube 330 based on the water temperature received from the normal temperature sensor, thereby achieving precise temperature regulation.

In a standard water supply mode, the second heating tube 320 mainly serves the purpose of heating the water. However, in certain usage scenarios where the user consistently utilizes a small volume of water, the first heating tube 330 continues to heat, leading to a gradual increase in the water temperature within the inner tank 200. If the over-temperature sensor records a temperature exceeding 93°C, it will compel the second heating tube 320 to shut down. Furthermore, in the event that the upper tank body 230 is devoid of water while the second heating tube 320 remains powered on, a condition known as dry burn may arise. If the detected temperature exceeds 97°C under these circumstances, the power supply will be forcibly disconnected to safeguard the heating tube from potential harm.

The electric water heater in one embodiment of the present invention features specific control methods, including: a normal water supply mode, an instant hot water supply mode, and an increased capacity water supply mode.

In the normal water supply mode, the second heating tube 320 within the upper tank body 230 is activated. The control board 123 ceases to supply power to the second heating tube 320 for heating once the water temperature, as measured by the second temperature sensor 620, reaches a predetermined temperature.

In the instant hot water supply mode, the first heating tube 330 in the upper tank body 230 is activated. The control board 123 regulates the heating power of the first heating tube 330 based on the water temperature readings provided by the first temperature sensor 610.

In the increased capacity water supply mode, both the second heating tube 320 in the upper tank body 230 and the third heating tube 310 in the lower tank body 240 are powered. The control board 123 discontinues powering the second heating tube 320 for heating once the water temperature, as detected by the second temperature sensor 620, achieves a preset temperature value. Similarly, the control board 123 halts the power supply to the third heating tube 310 for heating when the water temperature, as measured by the third temperature sensor 630, reaches a preset temperature.

In different water heating modes, the control board 123 manages the operation of the respective heating tubes based on the readings from various temperature sensors, thereby accommodating the user's varying water usage needs.

Preferably, to enhance the hot water output of the electric water heater, minimize energy use, and achieve an increased capacity effect, the third heating tube 310 in the lower tank body 240 is continuously powered for heating during the user's water usage in the increased capacity water supply mode. The control board 123 activates the second heating tube 320 when the water temperature, as measured by the third temperature sensor 630, falls below a first temperature value. Likewise, the first heating tube 330 is activated when the water temperature, as detected by the second temperature sensor 620, drops below a second temperature value. The control board 123 adjusts the heating power of the first heating tube 330 based on the water temperature readings from the first temperature sensor 610.

In the increased capacity mode, after the water in both the upper and lower tank bodies of the electric water heater has been heated to their set temperatures, the third heating tube 310 is initially used to heat the water in the lower tank body 240, fully exploiting the additional hot water capacity of the lower tank body 240. Subsequently, when the water temperature in the lower tank body 240 no longer satisfies the usage requirements, the second heating tube 320 in the upper tank body 230 is activated for heating, maximizing the hot water capacity of the upper tank body 230. Finally, when the water temperature in the upper tank body 230 is insufficient, the first heating tube 330 is engaged, working with the instant hot water supply mode to optimize the hot water output.

This ensures that the heated hot water in both the upper and lower tank bodies is utilized efficiently, increasing the capacity while minimizing the overall energy consumption of the heating element 300.

In one embodiment of the present invention, for convenient installation of the control board 123, one end of the outer casing 100 is equipped with an electrical component 120, which includes an end cap 121 and a maintenance cover 122. The end cap 121 has a recessed structure with a slot 1211 therein and an interface channel 1212. The maintenance cover 122 is placed on the end cap 121 and covers the recessed structure, forming an electrical installation chamber with the end cap 121. The control board 123 is located inside the electrical installation chamber and is inserted into the slot 1211.

To facilitate fixing the control board 123, a fixing installation component 124 is also included, which has a connecting part 1241 and a positioning part 1242. The connecting part 1241 is inserted into the interface channel 1212, and the positioning part 1242 abuts against the edge of the control board 123.

Specifically, the electric water heater is configured with the electrical component 120 to accommodate the control board 123. During installation, the control board 123 is first inserted into the slot 1211 on the end cap 121 for pre-installation and positioning.

Then, the connecting part 1241 of the fixing installation component 124 is inserted into the interface channel 1212 on the end cap 121, so that the fixing installation component 124 is fixed on the end cap 121 through the connecting part 1241. At the same time, the positioning part 1242 of the fixing installation component 124 blocks and abuts against the outer side of the control board 123 to prevent the control board 123 from coming out of the slot 1211.

The end cap 121 features the slot 1211 designed to accommodate and secure the control board 123. Additionally, the end cap 121 includes the interface channel 1212 that facilitates the connection with the fixing installation component 124. When the connecting part 1241 of the fixing installation component 124 is inserted into the interface channel 1212, the positioning part 1242 of the fixing installation component 124 presses against the edge of the control board 123, preventing it from dislodging from the slot 1211. This screwless design for the control board 123 simplifies the assembly process of the electric water heater, reducing the assembly difficulty and improving overall efficiency.

In one embodiment, a locking part 1213 is also provided on the end cap 121, and a locking matching part 1243 is provided on the end of the connecting part 1241.

After the connecting part 1241 is inserted into the interface channel 1212, the locking part 1213 and the locking matching part 1243 are connected together.

Specifically, to improve the reliability of the installation of the fixing installation component 124, the connecting part 1241 is designed such that after it is inserted into the interface channel 1212, the locking matching part 1243 also passes through the interface channel 1212 and engages with the locking part 1213 to lock the fixing installation component 124 in place. This prevents the connecting part 1241 from coming out of the interface channel 1212, improving the reliability of the connection.

The locking part 1213 and the locking matching part 1243 can have various forms, such as protruding tooth structures that can engage with each other to achieve locking.

In one embodiment, a positioning slot 1244 is provided on the positioning part 1242, and the edge of the control board 123 is inserted into the positioning slot 1244.

Specifically, to improve the reliability of the positioning part 1242 limiting the control board 123, a positioning slot 1244 is provided on the positioning part 1242. After the fixing installation component 124 is inserted into the interface channel 1212 through the connecting part 1241, the positioning part 1242 abuts against the control board 123, and the control board 123 is inserted into the positioning slot 1244.

In some embodiments, to improve the reliability of the connection between the slot 1211 and the control board 123, the slot 1211 includes two first slot bodies that are arranged relative to each other, and the control board 123 is inserted between the two first slot bodies.

Specifically, during assembly, the two side edges of the control board 123 are inserted into the corresponding first slot bodies. These first slot bodies effectively limit the position of the control board 123. Additionally, the slot 1211 also includes a second slot body that is distributed between the two first slot bodies and is arranged relative to the positioning part 1242. The control board 123 is also inserted into the second slot body.

After the control board 123 is inserted into the first slot bodies and assembled in place, the corresponding edges of the control board 123 will be located in the slot bodies. With the cooperation of the positioning part 1242, all four edges of the control board 123 can be effectively positioned.

In one embodiment, a positioning rib 1214 is placed on the side wall of the recessed structure, and the positioning rib 1214 abuts against the control board 123.

Specifically, the positioning rib 1214 can abut against the surface of the control board 123, and the positioning rib 1214 collaborates with the positioning slot 1244 to more precisely restrict the position of the control board 123. The control board 123 is located between the positioning rib 1214 and the positioning slot 1244, minimizing the likelihood of vibration of the control board 123.

In order to enhance the overall aesthetic of the electric water heater, one embodiment of the present invention includes a cover component 400, which includes a shielding wall cover 410 and a cover plate 420. The shielding wall cover 410 has a first installation opening 411, and the cover plate 420 has one or more installation holes 421. The cover plate 420 can be detachably installed within the first installation opening 411.

The shielding wall cover 410 is mounted onto the outer casing 100, with the inlet pipe 210 and the outlet pipe 220 extending outward from the outer casing 100 and inserted through the installation hole 421.

During assembly, the inner tank 200 is initially installed inside the outer casing 100, with a thermal insulation layer formed between the inner tank 200 and the outer casing 100. Following this, the shielding wall cover 410 of the cover component 400 is snapped onto the outer casing 100.

In the process of snapping, the inlet pipe 210 and the outlet pipe 220 are inserted into the larger first installation opening 411 on the shielding wall cover 410. The relative movement of the inlet pipe 210 and the outlet pipe 220 within the first installation opening 411 allows for a greater range of adjustment, enabling the shield wall cover 410 to be positioned as needed during installation to ensure a secure fit onto the outer casing 100. This adjustment capability helps to prevent assembly difficulties that might arise from interference between the inlet pipe 210 and the outlet pipe 220 and the shielding wall cover 410.

After the shielding wall cover 410 is installed, the cover plate 420 is fitted onto the shielding wall cover 410 to cover the first installation opening 411, with the inlet pipe 210 and the outlet pipe 220 passing through the corresponding installation hole 421.

By incorporating a first installation opening 411 on the shielding wall cover 410 and a detachable cover plate 420 within the first installation opening 411, during assembly, the cover plate 420 is first removed from the shielding wall cover 410, allowing the water inlet and outlet pipes 220 to be inserted through the first installation opening 411. The size of the first installation opening 411 is sufficiently large to accommodate the positional adjustments needed during the installation of the shielding wall cover 410. Once the shielding wall cover 410 is properly positioned, the cover plate 420 is installed on the shielding wall cover 410 to cover the water inlet and outlet pipes 220, thereby simplifying the assembly of the electric water heater and enhancing the quality of the assembly.

In one embodiment of the present invention, the first installation opening 411 is a strip-shaped structure that extends along the length of the outer casing 100. The cover plate 420 has at least two installation holes 421, with one installation hole 421 for the inlet pipe 210 and the other installation hole 421 for the outlet pipe 220.

Specifically, the cover plate 420 has at least two installation holes 421 to accommodate the installation requirements of the inlet pipe 210 and the outlet pipe 220. Regarding the structure of the first installation opening 411, it is configured as a strip-shaped structure that runs along the length of the outer casing 100 to enhance the adjustability of the shielding wall cover 410. This design allows the shielding wall cover 410 to be easily snapped onto the outer casing 100 from one end along its length. The elongated nature of the first installation opening 411 ensures that it does not interfere with the positioning of the inlet pipe 210 or the outlet pipe 220 during the installation of the shielding wall cover 410.

In some embodiments, the cover plate 420 can be installed using various structural forms. For instance, it can be secured to the shielding wall cover 410 via screw connection, or alternatively, it can be snap-fitted onto the shielding wall cover 410.

In another embodiment, the shielding wall cover 410 includes a front panel 412, side panels 413, and a bottom panel 414. The front panel 412 is located at the front edge of the bottom panel 414, while the side panels 413 are located at the corresponding sides of both the front panel 412 and the bottom panel 414. The bottom panel 414 has the first installation opening 411, the front panel 412 is snap-fitted onto the outer casing 100, and the edge of each side panel 413 that abuts the outer casing 100 is contoured to match the outer shape of the outer casing 100.

Specifically, the shielding wall cover 410 is fitted onto on the outer casing 100 through the front panel 412. The outer casing 100 has installation slots 110, which are slotted holes with a tapered width where one end is narrower that the other. The front panel 412 has latches 415 that are inserted into the installation slots 110.

The installation slot 110 extends along the length of the outer casing 100. During assembly, the latch 415 is inserted into the wider end of the installation slot 110. Subsequently, the shielding wall cover 410 is pushed into place, allowing the latch 415 to snap onto the narrower end of the installation slot 110, thus completing the installation.

To enhance the reliability of the snap-fit mechanism, additional latches 415 can be provided on the side panels 413, which support the front panel 412 in its snap-fit operation and improve the overall assembly reliability.

In one embodiment of the present invention, a second installation opening 416 is provided on the front panel 412, where a detachable control panel 430 is mounted.

Specifically, the control panel 430 is secured in the second installation opening 416 using a snap-fit or screw connection.

In another embodiment of the present invention, a concealing cover 440 is included, which is detachably provided at the bottom of the shielding wall cover 410 to cover the inlet pipe 210 and the outlet pipe 220.

Specifically, the concealing cover 440 is provided to hide the sections of the inlet pipe 210 and the outlet pipe 220 that protrude from the shielding wall cover 410, thereby enhancing the aesthetic appeal of the electric water heater.

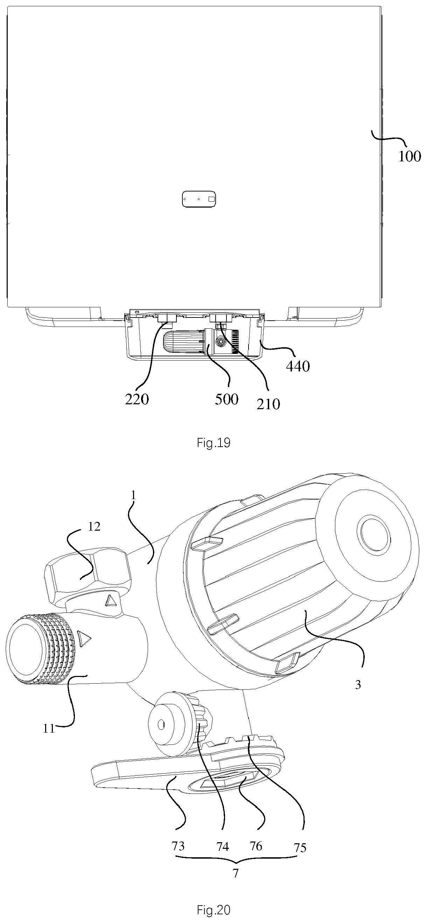

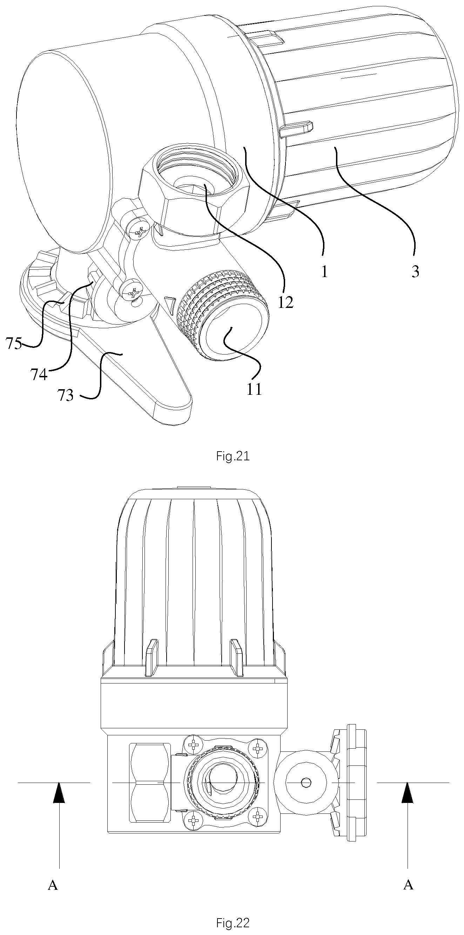

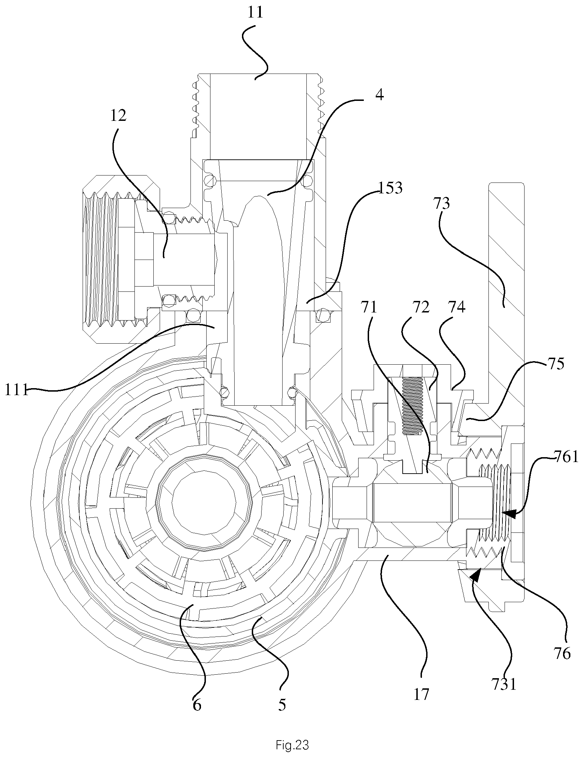

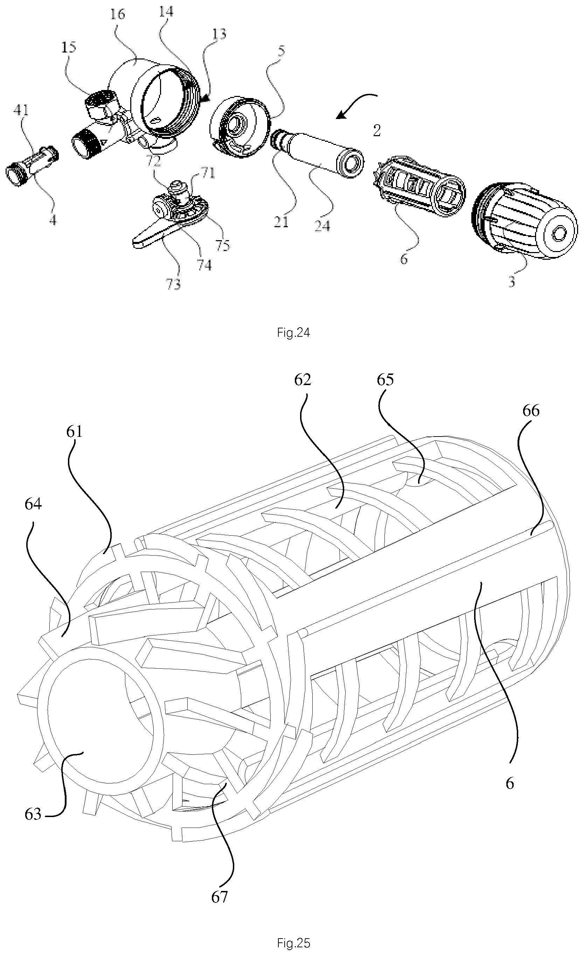

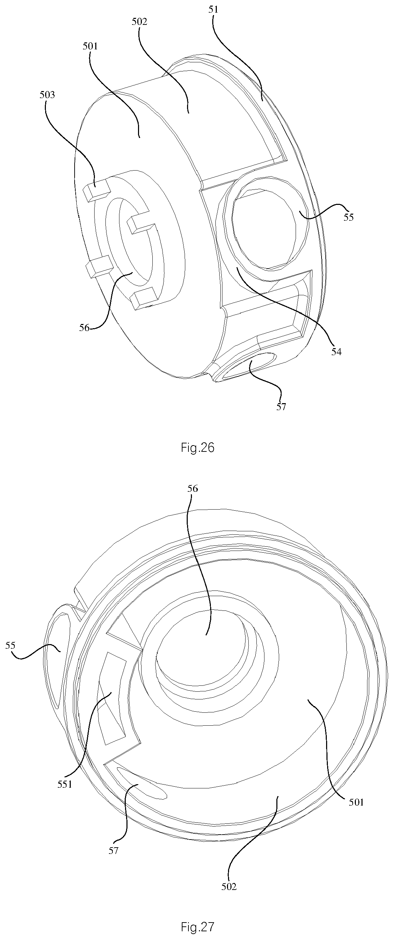

Embodiment 3: As shown in Fig.19 to Fig.27, a filter 500 can be provided on the water inlet pipe 210 to improve water quality inside the inner tank 200 and reduce scale buildup. The concealing cover 440 also encloses the filter 500.

Specifically, to enhance the water quality entering the inner tank 200, the water flowing through the inlet pipe 210 is first filtered. Additionally, the filter is concealed behind the concealing cover 440, maintaining the water heater's aesthetic appeal.

In another embodiment of the present invention, the following structural improvements are made to extend the service life of the filter.

The filter includes an installation main body 1 and a filter component. The filter component includes a filter core 2 and a filter bottle 3. The installation main body 1 is used to connect the water inlet pipe 210 of the water heater to the user's home water supply pipe and house the filter core 2 and the filter bottle 3 of the filter component.

The filter bottle 3 and the filter core 2 are installed on the installation main body 1, with the filter bottle 3 covering the filter core 2. A water inlet connection pipe 11 is connected to a water inlet, while the water outlet connection pipe 12 is connected to a water outlet.

Specifically, the installation main body 1 is provided with the water inlet connection pipe 11 and a water outlet connection pipe 12. The filter core 2 includes a shell 21 and a filter net 24. The shell 21 has the water inlet and the water outlet. The filter net 24 covers the water inlet.

Moreover, as the filter core 2 is provided between the installation main body 1 and the filter bottle 3, a cleaning component 6 is provided the filter to facilitate periodic cleaning of the filter net 24 on the filter core 2. The cleaning component 6 includes a first water flow driving part 61 and a first cleaning part 62.

The cleaning component 6 is rotatably mounted on the shell 21. The first water flow driving part 61 is configured to be driven by the water flow, which in turn drives the cleaning component 6 to rotate on the shell 21. The first cleaning part 62 is configured to rotate along with the cleaning component 6 and scrub the filter net 24 on the shell 21.

The installation main body 1 is equipped with a waste discharge connection pipe 17 to facilitate the timely discharge of wastewater generated after cleaning the filter core 2 through the cleaning component 6. The waste discharge connection pipe 17 is connected to the internal space of the filter bottle 3.

During normal filtration, water enters the installation main body 1 through the water inlet connection pipe 11 and flows into the filter bottle 3. The water is then filtered through the filter net 24 on the shell 21 within the filter bottle 3, entering the shell 21 through the water inlet and is exiting from the water outlet. The filtered water feeds into the water outlet connection pipe 12 for use in the water heater.

Over time, the surface of the filter net 24 becomes clogged with mud, sand, and other impurities, reducing filtering ability and efficiency. In this case, the waste discharge connection pipe 17 can be opened to clean the filter net 24 of the filter core 2 through the cleaning component 6.

To initiate the cleaning process, the waste discharge connection pipe 17 is first opened. The water that enters through the water inlet connection pipe 11 is then discharged through the waste discharge connection pipe 17. The flow of water in the filter interacts with the first water flow driving part 61 of the cleaning component 6, which in turn rotates the cleaning component 6. The rotating first cleaning part 62 scrubs the filter net 24 of the filter core 2, removing surface impurities and restoring the filtering ability of the filter net 24. This process ensures long-term high filtering efficiency and extends the overall lifespan of the filter.

When the waste discharge connection pipe 17 is open, at least a portion of the water entering the installation main body 1 through the water inlet connection pipe 11 flows into the filter bottle 3, interacting with the first water flow driving part 61, in turn, rotating the cleaning component 6 on the shell 21. This allows the first cleaning part 62 to clean the filter net 24. The water then flows out of the filter bottle 3 through the surface of the shell 21 and the waste discharge connection pipe 17.

In practical use, opening the waste discharge connection pipe 17 enables water from the water inlet connection pipe 11 to enter the filter bottle 3. Moreover, a portion of water entering the installation main body 1 via the water inlet connection pipe 11 will, because of the function of the water outlet, directly exits through the waste discharge connection pipe 17.

The cleaning component 6 is provided on the filter core 2, comprising the first water flow driving part 61 and the first cleaning part 62. The first water flow driving part 61 harnesses the water flowing in the filter to drive the cleaning component 6 to rotate around the filter core 2. When the filter core 2 requires cleansing, the waste discharge connection pipe 17 is opened. Then incoming water flow is then utilized to propel the cleaning component 6 into rotation, effectively scrubbing the filter net 24 of the filter core 2. This mechanism significantly mitigates the decline in filtration efficiency that would otherwise result from the filter net 24 being obstructed by contaminants. As a result, it enhances the filter's overall efficiency and prolongs its operational lifespan.

In one embodiment, to ensure reliable rotation of the cleaning component 6 around the shell 21 of the filter core 2, one end of the cleaning component 6 is provided with a first supporting part 63. The first supporting part 63 abuts against the outer surface of the shell 21 and is configured to facilitate the rotation of the cleaning component 6 on the shell 21.

Specifically, the cleaning component 6 is supported on the shell 21 by the first supporting part 63, allowing the cleaning component 6 to rotate freely on the shell 21.The first supporting part 63 is installed close to the installation main body 1 and works in conjunction with the first cleaning part 62, which is in contact with the filter net 24, to facilitate the cleaning component 6's rotation on the shell 21.

In some embodiments, the reliability of the first supporting part 63 is enhanced by employing a sleeve structure. The first supporting part 63 is sleeved on the outer surface of the shell 21, facilitating the rotation of the cleaning component 6.

Additionally, to increase the rotational driving force generated by the water flow for the cleaning component 6, a second water flow driving part 64 is provided on the outer surface of the first supporting part 63. The first water flow driving part 61 and the second water flow driving part 64 are arranged adjacent to each other along the rotational axis of the cleaning component 6.

Specifically, the first water flow driving part 61 is configured to be driven by the water flow towards the filter bottle 3, thereby rotating the cleaning component 6.

The second water flow driving part 64 is configured to be driven by the water flow towards the waste discharge connection pipe 17, also contributing to the rotation of the cleaning component 6.

The water flow within the filter includes the water entering the installation main body 1 from the water inlet connection pipe 11 and moving towards the filter bottle 3, which acts on the first water flow driving part 61.

Concurrently, the water flow within the filter also includes the water flow from the filter bottle 3 towards the installation main body 1 and discharged from the waste discharge connection pipe 17, which acts on the second water flow driving part 64.

Consequently, both the first water flow driving part 61 and the second water flow driving part 64 are propelled by the water flow, effectively rotating the cleaning component 6 on the shell 21 and driving the first cleaning part 62 to effectively clean the filter net 24.

In some embodiments, the first water flow driving part 61 and the second water flow driving part 64 are each formed by including several guide vanes arranged in a circle around the cleaning component 6.

Specifically, the water flow in the filter acts on the guide vanes, which generate resistance to the water flow and use the reaction force to drive the cleaning component 6 to rotate.

The guide vanes are arranged at an angle relative to the rotational axis of the cleaning component 6. The direction of the angled arrangement of the guide vanes corresponds to the direction of the water flow acting on them, so that the guide vanes forming the first water flow driving part 61 and the second water flow driving part 64 can apply a rotational driving force in the same direction to the cleaning component 6.

In another embodiment, the other end of the cleaning component 6 is provided with a second supporting part 65, which abuts against the outer surface of the shell 21 and is configured to cooperate with the first supporting part 63 to support the rotation of the cleaning component 6 on the shell 21.

Specifically, the other end of the cleaning component 6 is further configured with a second supporting part 65, and the first supporting part 63 and the second supporting part 65 cooperate to effectively install the cleaning component 6 on the shell 21.

The specific structure of the second supporting part 65 can take various forms, such as a sleeve structure that fits over the shell 21, or multiple supporting columns 503 that abut against the shell 21.

In another embodiment, the cleaning component 6 is designed as a whole sleeve structure, with the first cleaning part 62 positioned on the inner wall of the cleaning component 6.

To ensure thorough cleaning of the shell 21, the cleaning component 6 has a sleeve structure that fits over the outer surface of the shell 21, and multiple first cleaning parts 62 can be arranged on the inner wall of the cleaning component 6.

Additionally, a second cleaning part 66 can be set on the outer wall of the cleaning component 6, with the second cleaning part 66 abutting the inner wall of the filter bottle 3. This allows the second cleaning part 66 to clean the inside of the filter bottle 3.

Both the first cleaning part 62 and the second cleaning part 66 have strip-shaped structures extending along the axis of rotation of the cleaning component 6. Moreover, the first cleaning part 62 and the second cleaning part 66 can be made of flexible materials such as silicone rubber or natural rubber to ensure close adhesion to the surfaces to be cleaned.

The surface of the cleaning component 6 is provided with a recessed structure that allows water in the filter bottle 3 to enter the cleaning component 6 through the recessed structure for filtration processing by the filter core 2.

In another embodiment of the present invention, the waste discharge connection pipe 17 can be externally connected to an independent valve component 7 for controlling its opening and closing. Alternatively, a valve component 7 can be integrated on the waste discharge connection pipe 17.

Specifically, the valve component 7 includes a valve body 71 and a rotation component 72. The valve body 71 is rotatably installed in the waste discharge connection pipe 17, while the rotation component 72 is mounted onto the valve body 71 and extends beyond the outer wall of the waste discharge connection pipe 17. The valve body 71 is configured to control the opening and closing of the waste discharge connection pipe 17.

Specifically, the valve body 71 is provided in the waste discharge connection pipe 17 and can rotate to facilitate the opening and closing of the waste discharge connection pipe 17. The rotation component 72, which drives the valve body 71 to rotate, extends outside the wall of the waste discharge connection pipe 17. By rotating the rotation component 72 , the valve body 71 can be driven to rotate in the waste discharge connection pipe 17.

The specific structure of the valve body 71 can adopt conventional valve designs. For example, the valve body 71 can be a ball structure with water flow holes positioned vertically on the ball, and by rotating the ball, the alignment of the water flow holes can be controlled, thus achieving the opening and closing of the waste discharge connection pipe. Alternatively, the valve body 71 can be a valve plate, where rotation of the valve plate controls the opening and closing of the pipe.

In one embodiment, to facilitate the user's operation of opening and closing the valve body 71 during practical use, the valve component 7 includes a driving handle 73. The driving handle 73, rotatably installed on the waste discharge connection pipe 17, drives the rotation component 72 to rotate.

Specifically, the driving handle 73 is rotatably installed on the waste discharge connection pipe, enabling the user to manually rotate, which in turn drives the rotation component 72, facilitating the rotation of the valve body 71 and thus controlling the opening and closing of the waste discharge connection pipe 17.

In some embodiments, to achieve both ease of operation and compactness in design, a passive gear structure 74 is provided on the rotation component 72, and an active gear structure 75 is provided on the driving handle 73. The passive gear structure 74 and the active gear structure 75 mesh with each other.

Specifically, the passive gear structure 74 is provided on the end of the rotation component 72 that protrudes beyond the waste discharge connection pipe 17, and the active gear structure 75 is provided on the driving handle 73. When the user rotates the driving handle 73, the active gear structure 75 engages with the passive gear structure 74, effectively driving the rotation component 72 to rotate.

In another embodiment, to ensure the seamless integration of the driving handle 73 with the waste discharge connection pipe 17, the valve component 7 includes a connector 76. The connector 76 is installed on the mouth of the waste discharge connection pipe 17, with a waste discharge hole 761 that is connected with the waste discharge connection pipe 17. The driving handle 73 has an installation hole 731, through which the connector 76 and/or the waste discharge connection pipe 17 are inserted into. The connector 76 serves to prevent the driving handle 73 from detaching from the waste discharge connection pipe 17.

The driving handle 73 is integrated and rotatably installed on the waste discharge connection pipe 17. To achieve this, the driving handle 73 is provided with the installation hole 731, allowing the driving handle 73 to rotate relative to the waste discharge connection pipe 17. The connector 76 is connected to the mouth of the waste discharge connection pipe 17, positioning the driving handle 73 between the connector 76 and the passive gear structure 74. This ensures reliable engagement between the active gear structure 75 and the passive gear structure 74 while also securing the driving handle 73 on the waste discharge connection pipe 17, meeting the integrated installation requirements.

Regarding the driving handle 73, it may be directly sleeved on the outside of the waste discharge connection pipe 17 to meet the requirement for rotational mounting, or a stepped structure can be introduced on the connector 76. Through the installation hole 731, the driving handle 73 can be installed on the stepped structure, permitting rotation while the surface of the step limits the position of the driving handle 73.

To conveniently connect various water pathways inside the installation main body 1, a water distributor 5 is provided, allows for convenient connections between the water inlet connection pipe 11, the water outlet connection pipe 12, the waste discharge connection pipe 17, and the filter core 2.

The installation main body 1 has an open installation cavity with a first connection interface 13 at its opening end. Inside the first connection interface 13, a second connection interface 14 is provided.

The water distributor 5 comprises a first water flow interface 55, a second water flow interface 56, and a third water flow interface 57.

The water distributor 5 is provided on the second connection interface 14, while the filter bottle 3 is secured and connected to the first connection interface 13 and is sealed and connected with the water distributor 5. The water distributor 5 and the inner wall of the installation main body 1 form an outlet cavity, while the water distributor 5 and the filter bottle 3 form an inlet cavity. The filter core 2 and the cleaning component 6 are provided between the water distributor 5 and the filter bottle 3, and the cleaning component 6 can rotate and be fitted on the shell 21.

The water inlet connection pipe 11 is connected with the water inlet through the first water flow interface 55, the water outlet connection pipe 12 is connected with the water outlet through the second water flow interface 56, and the waste discharge connection pipe 17 is connected with the internal space of the filter bottle 3 through the third water flow interface 57.

Specifically, the installation main body 1 has a built-in water distributor 5, creating an independent outlet cavity inside the installation main body 1 that directly is connected to the water outlet connection pipe 12. The water distributor 5 forms an inlet cavity between the installation main body 1 and the external filter bottle 3, enabling connection to the water inlet connection pipe 11.

The water distributor 5 has corresponding a first water flow interface 55, a second water flow interface 56, and a third water flow interface 57 to meet the water path connection requirements of the water inlet connection pipe 11, the water outlet connection pipe 12, and the waste discharge connection pipe 17 configured on the installation main body 1.

During operation, water flowing into the water distributor 5 through the first water flow interface 55 acts upon the first water flow driving part 61, driving the cleaning component 6 to rotate on the shell 21. This rotation, driven by the water flow, causes the first cleaning part 62 to rotate and scrub the filter net 24 on the shell 21.

In some embodiments, the water distributor 5 has an end plate portion 501 and a ring portion 502. The first water flow interface 55 and the third water flow interface 57 are set on the ring portion 502, and the second water flow interface 56 is set on the end plate portion 501.

Specifically, the water distributor 5 has a shell structure. The end plate portion 501 of the water distributor 5 forms an outlet cavity in the installation cavity of the installation main body 1, which is connected to the inlet of the filter core 2 through the second water flow interface 56.

The ring portion 502 of the water distributor 5 is provided with the first water flow interface 55 and the third water flow interface 57, which respectively connect to the water inlet connection pipe 11 and the waste discharge connection pipe 17.

Once the water distributor 5 is mounted in the installation main body 1, the end of the filter core 2 with the inlet is connected to the second water flow interface 56 and is enclosed by the ring portion 502. The ring portion 502 forms a sealed connection with both the filter bottle 3 and the installation main body 1, thereby forming a water inlet cavity between the water distributor 5 and the filter bottle 3. Water supplied through the water inlet connection pipe 11 enters the inlet cavity, where it is filtered by the filter net 24 of the filter core 2 before being discharged from the outlet of the filter core 2. The filtered water then flows into the outlet cavity through the second water flow interface 56 and is ultimately discharged from the water outlet connection pipe 12.

In some embodiments, a plurality of supporting columns 503 are positioned on the end plate portion 501, situated within the outlet cavity and abut against the installation main body 1.

Specifically, to establish the correct placement of the water distributor 5, the supporting columns 503 is provided on the end plate portion 501. Once the water distributor 5 is fitted into the installation cavity of the installation main body 1, the supporting columns 503 abut against the inner wall of the installation cavity, thereby creating the outlet cavity between the water distributor 5 and the installation main body 1. The supporting columns 503 are arranged around the second water flow interface 56.

In some embodiments, the inner wall of the ring portion 502 is also provided with a flow guiding channel 504, which is connected to the first water flow interface 55. The outlet of the flow guiding channel 504 is directed towards the first water flow driving part 61.

To ensure the cleaning component 6 rotates swiftly on the filter core 2, the water entering the water inlet cavity must effectively strike the first water flow driving part 61. For this purpose, the flow guiding channel 504 is provided on the inner wall of the ring portion 502 to guide the water flow entering through the first water flow interface 55. The outlet of the flow guiding channel 504 is aligned with the first water flow driving part 61, discharging water directly onto it. The water exiting the flow guiding channel 504 exerts pressure on the first water flow driving part 61, ensuring that it receives adequate water pressure to rotate the cleaning component 6.

Likewise, one end of the cleaning component 6 is provided with the first supporting part 63, which abuts against the outer surface of the shell 21, providing support for the rotation of the cleaning component 6 on the shell 21. The ring portion 502 surrounds the first supporting part 63.

The first supporting part 63 is a sleeve structure, with the second water flow driving part 64 on its outer surface. The first water flow driving part 61 and the second water flow driving part 64 are positioned adjacent to each other along the rotational axis of the cleaning component 6.

The first water flow driving part 61 is configured to be propelled by the water flow directed towards the filter bottle 3, thereby rotating the cleaning component 6.

The second water flow driving part 64 is configured to be driven by the water flow directed towards the waste discharge connection pipe 17, also rotating the cleaning component 6.

Specifically, the first supporting part 63 is housed within the space enclosed by the ring portion 502, which also includes the third water flow interface 57. This arrangements allow the water flow emerging from the third water flow interface 57 to additionally act on the second water flow driving part 64, enhancing the speed at which the water flow drives the cleaning component 6 to rotate.

In one embodiment, to minimize the mutual influence between the water flows received by the first water flow driving part 61 and the second water flow driving part 64, the cleaning component 6 has a sleeve structure, incorporating the first cleaning part 62 on its inner wall. A plurality connecting ribs 67 are positioned between the first supporting part 63 and the cleaning component 6, with each pair of adjacent connecting ribs 67 creating a water flow interval that directs water flow towards the second water flow driving part 64.

Specifically, the flow guiding channel 504 is oriented such that its outlet faces the water outlet of the filter bottles 3, ensuring that the water flow impacts the first water flow driving part 61 in the direction of the water outlet. Water entering the filter bottle 3 passes through the gap between the cleaning component 6 and the filter core 2, then flow back to the third water flow interface 57 of the water distributor 5. As the water flows back to the water distributor 5, it can exit through the water flow interval between the two connecting ribs, bypassing the first water flow driving part 61 on the outer wall of the cleaning component 6. Additionally, the water flow exiting the water flow interval cascades onto the surface of the first supporting part 63, impacting the second water flow driving part 64, thereby enhancing the rotation of the cleaning component 6 driven by the water flow.

In some embodiments, the outer wall of the cleaning component 6 includes the second cleaning part 66, which is attached to the inner wall of the filter bottle 3. Both the first cleaning part 62 and the second cleaning part 66 have strip-shaped structures that extend along the rotational axis of the cleaning component 6. The surface of the cleaning component 6 is provided with a recessed structure. Furthermore, to ensure reliable support at both ends of the cleaning component 6, the second supporting part 65 can be provided at the opposite end of the cleaning component 6, which abuts against the outer surface of the shell 21, working in tandem with the first supporting part 63 to support the rotation of the cleaning component 6 on the shell 21. For more details, please refer to the previous embodiment, and further elaboration will not be provided here.

In some embodiments, to enable users to directly observe the condition of the filter core 2 within the filter bottle 3 and replace it promptly when the water quality deteriorates, the filter bottle 3 is made of transparent or semi-transparent material.

Specifically, since the filter bottle 3 is made of transparent or semi-transparent material, users can directly monitor the state of the filter core 2 inside the filter bottle 3 during operation, allowing for a quicker replacement cycle of the filter core 2 when the water quality is poor.

In some embodiments, the installation main body 1 can be a single-piece structure. However, for ease of manufacturing, the installation main body 1 can also be a modular design, as explained below with reference to the drawings.

That is, the installation main body 1 comprises a first installation component 15 and a second installation component 16. The first installation component 15 is provided with the water inlet connection pipe 11 and water outlet connection pipe 12, while the second installation component 16 forms the installation cavity. The second installation component 16 includes the first connection interface 13, the second connection interface 14, and the waste discharge connection pipe 17. The first installation component 15 and the second installation component 16 are securely connected. The water inlet connection pipe 11, the water outlet connection pipe 12, and the waste discharge connection pipe 17 are each connected to the installation cavity. The filter core 2 is housed within the filter bottle 3, with the outlet of the filter core 2 positioned within the installation cavity.

Specifically, the installation main body 1 must be equipped with internal components capable of managing the flow requirements of both the inlet and outlet water streams, to simplify the manufacturing complexity, the water inlet connection pipe 11 and the water outlet connection pipe 12 are provided on the first installation component 15, and the waste discharge connection pipe 17 is provided on the second installation component 16.

To fulfill the water inlet and outlet needs of the installation main body 1 and to meet the demands for a compact and miniaturized design, the following structural enhancements are implemented for the installation main body 1.

The first installation component 15 is a three-way pipe, with each of its three ends forming the water inlet connection pipe 11, the water outlet connection pipe 12, and an auxiliary connection pipe 153, respectively. The water inlet connection pipe 11 and the auxiliary connection pipe 153 are arranged facing each other.

The second installation component 16 includes a communication port that connects with the installation cavity.

The filter also comprises an intermediate pipe 4, which is placed within the water inlet connection pipe 11. The outer end of the intermediate pipe 4 is sealed and attached to the inner wall of the water inlet connection pipe 11. The water inlet of the water inlet connection pipe 11 is in communication with the intermediate pipe 4. The outer wall of the intermediate pipe 4 and the inner wall of the water inlet connection pipe 11 form an auxiliary flow path 111. The water outlet connection pipe 12 communicates with the water outlet cavity through the auxiliary flow path 111 and the communication port. The inner end of the intermediate pipe 4 extends through the communication port and into the installation cavity. The outer wall of the intermediate pipe 4 and the inner wall of the water inlet connection pipe 11 create the auxiliary flow path 111, and the inner end of the intermediate pipe 4 reaches into the installation cavity of the second installation component 16 through the auxiliary connection pipe 153 and the communication port, ensuring communication with the water inlet cavity.

By utilizing the intermediate pipe 4 within the water inlet connection pipe 11 to create the auxiliary flow path 111, the overall structure of the first installation component 15 becomes more compact and miniaturized, thus meeting the requirements for a miniaturized design.

The water distributor 5, which is set within the installation cavity of the second installation component 16, serves to separate the water outlet cavity and the water inlet cavity within the installation cavity of the second installation component 16. A protruding annular interval part 51 is provided on the annular part, positioned on one side of the communication port, ensuring that the water inlet cavity and the water outlet cavity are segregated within the installation cavity of the second installation component 16.

The use of the intermediate pipe 4 to form the auxiliary flow path 111 in the water inlet connection pipe 11 meets the communication requirement between the water outlet connection pipe 12 and the water outlet cavity, making the overall structure of the first installation component 15 more compact and the thus meeting the design requirement for miniaturization.

The water divider 5, which is provided in the installation cavity of the second installation part 16, is used to separate the water outlet cavity and the water inlet cavity in the installation cavity of the second installation part 16. The protruding annular interval part 51 is provided on the annular part, adjacent to the communication port. These arrangements allows for the separation of the water inlet cavity and the water outlet cavity within the installation cavity of the second installation component 16.

In some embodiments, an insertion part 54 is provided on the annular part, and a first water flow interface 55 is provided on the insertion part 54, which is arranged opposite to the communication port and connected with the flow guiding channel 551 on the inner wall of the annular part.

The inner end of the intermediate pipe 4 is sealed and inserted into the first water flow interface 55, with the inner opening of the intermediate pipe 4 communicating with the water inlet cavity through the flow guiding channel 551.

During assembly, the inner end of the intermediate pipe 4 is inserted into the first water flow interface 55 to connect the intermediate pipe 4 with the water inlet cavity through the flow guiding channel 551. The intermediate pipe 4 and the insertion part 54 are configured to work together to isolate the inner end of the intermediate pipe 4 from the water outlet cavity, effectively separating the water inlet cavity and the water outlet cavity.

Furthermore, the placement of the insertion part 54 on the annular section allows for a more efficient use of the internal flow path within the water inlet connection pipe 11, thereby optimizing the flow of water through the outlet connection pipe 12. It also simplifies the overall assembly process of the filter, allowing for effective connection of the inner end of the intermediate pipe 4 with the water inlet cavity while effectively isolating it from the water outlet cavity, enabling quick and precise assembly of the filter.

To further increase the space of the water inlet of the water outlet connection pipe 12, a recessed structure 41 can be set on the intermediate pipe 4. The recessed structure 41 is positioned opposite to the water inlet of the water outlet connection pipe 12, enabling the water in the auxiliary flow path 111 to flow more smoothly into the water outlet connection pipe 12 through the recessed structure 41, ensuring a smooth flow of the water outlet water flow.

In the description of this specification, the terms "an embodiment," "some embodiments," "exemplary embodiment," "example," "specific example," or "some examples" are used to describe the specific features, structures, materials, or characteristics of an embodiment or example included in at least one embodiment or example of the invention. The above-mentioned terms do not necessarily refer to the same embodiment or example. Moreover, the specific features, structures, materials, or characteristics described can be combined in any suitable manner in one or more embodiments or examples.

The above embodiments are only used to illustrate the technical solutions of the invention and do not limit them. Although the invention has been described in detail with reference to the above embodiments, those skilled in the art can still make modifications to the technical solutions described in the embodiments or make equivalent replacements for some technical features. These modifications or replacements do not cause the essence of the corresponding technical solutions to depart from the spirit and scope of the technical solutions required to be protected by the invention.

## Claims

1. An electric water heater with anti-electrochemical corrosion function, **characterized by** comprising:
an outer casing (100), wherein the outer casing (100) is provided with an inlet pipe (210) and an outlet pipe (220), and an control board (123) is arranged in the outer casing (100);
an inner tank (200), wherein the inner tank (200) is respectively connected with the inlet pipe (210) and the outlet pipe (220); and
an electric heating element (300), wherein the electric heating element (300) is arranged in the inner tank (200);
wherein the inlet pipe (210) and the outlet pipe (220) are equipped with anti-electrochemical corrosion pipe assemblies, the anti-electrochemical corrosion pipe assembly includes an inner tube body (211), an insulating fixing member (212), and an outer connecting tube body (213), an communicating hole (2121) is provided on the insulating fixing member (212), the inner tube body (211) is connected to the outer connecting tube body (213) through the insulating fixing member (212), the inner tube body (211) is in communication with the outer connecting tube body (213) through the communicating hole (2121), and the inner tube body (211) and the outer connecting tube body (213) are insulated from each other; the insulating fixing member (212) is arranged on the inner tank (200), the inner tube body (211) is located in the inner tank (200), and the outer connecting tube body (213) is located outside the inner tank (200) and is configured to be made of the same metal material as external water pipe.

2. The electric water heater with anti-electrochemical corrosion function according to claim 1, **characterized by** further comprising an auxiliary connecting member (214) arranged on the insulating fixing member (212), the auxiliary connecting member (214) is a sleeve structure and is sleeved on the outer side of the inner tube body (211), the inner wall of the auxiliary connecting member (214) is provided with internal threads, and the auxiliary connecting member (214) is electrically insulated from the inner tube body (211).

3. The electric water heater with anti-electrochemical corrosion function according to claim 2, **characterized by** the outer connecting tube body (213) and the auxiliary connecting member (214) being enclosed within the insulating fixing member (212).

4. The electric water heater with anti-electrochemical corrosion function according to claim 2, **characterized by** further comprising an insulating sleeve structure (2122) arranged on the insulating fixing member (212), the insulating sleeve structure (2122) is located between the inner tube body (211) and the auxiliary connecting member (214).

5. The electric water heater with anti-electrochemical corrosion function according to claim 1, **characterized by** the communicating hole (2121) being a stepped hole structure, a stepped surface is formed in the communicating hole (2121), and the inner tube body (211) is inserted into the communicating hole (2121) and abuts against the stepped surface.

6. The electric water heater with anti-electrochemical corrosion function according to any one of claims 1-5, **characterized by** further comprising an anti-corrosion component (250);
the anti-corrosion component (250) comprises:
a magnesium rod (251), wherein one end of the magnesium rod (251) is provided with an insertion hole (257);
an insulating part (252), wherein a first through hole (258) is arranged on the insulating part (252);
a fixing installation part (253), wherein a second through hole (259) is arranged on the fixing installation part (253), and the fixing installation part (253) is configured to be fixed and installed on the inner tank (200) of the water heater;
a conductive rod (254), wherein the conductive rod (254) sequentially passes through the second through hole (259) and the first through hole (258) and is inserted into the insertion hole (257), and the conductive rod (254) is respectively electrically connected with the magnesium rod (251) and the fixing installation part (253); and
the insulating part (252) is arranged between the magnesium rod (251) and the fixing installation part (253).

7. The electric water heater with anti-electrochemical corrosion function according to claim 6, **characterized by** a sealing ring (255) being arranged between the insulating part (252) and the magnesium rod (251) and/or between the insulating part (252) and the fixing installation part (253).

8. The electric water heater with anti-electrochemical corrosion function according to claim 7, **characterized by** a stop ring (2541) being arranged on the conductive rod (254); the stop ring (2541) abuts against the end of the magnesium rod (251) and is clamped between the sealing ring (255) and the magnesium rod (251);
an insulating coating (2542) is further arranged on the rod wall of the conductive rod (254), the insulating coating (2542) is adjacent to the stop ring (2541), and the portion of the conductive rod (254) with the insulating coating (2542) is inserted into the insertion hole.

9. The electric water heater with anti-electrochemical corrosion function according to claim 8, **characterized by** further comprising:
a cover component (400), wherein the cover component (400) comprises an shielding wall cover (410) and a cover plate (420), an installation opening (411) is arranged on the shielding wall cover (410), and at least one installation hole (421) is arranged on the cover plate (420), the cover plate (420) can be detachably arranged in the installation opening (411);
wherein the shielding wall cover (410) is arranged on the outer casing (100), and the inlet pipe (210) and the outlet pipe (220) are respectively inserted into the installation hole (421).

10. The electric water heater with anti-electrochemical corrosion function according to claim 1, **characterized by** further comprising a concealing cover (440), the concealing cover (440) can be detachably arranged at the bottom of the shielding wall cover (410) and covers the inlet pipe (210) and the outlet pipe (220).
